# EUROPÄISCHE PATENTSCHRIFT

(11) **EP 3 077 864 B1**
(45) Veröffentlichungstag und Bekanntmachung des Hinweises auf die Patenterteilung: **11.04.2018**
(21) Anmeldenummer: 14830939.6
(22) Anmeldetag: 04.12.2014
(51) Int. Cl.: G02B 13/06, G02B 13/16, G03B 37/04, G08B 13/196, H04N 5/232

(54) **MEHRKANALIGE OPTISCHE ANORDNUNG**
MULTI-CHANNEL OPTICAL ARRANGEMENT
DISPOSITIF OPTIQUE À PLUSIEURS CANAUX

(30) Priorität: 06.12.2013 DE 102013113625
(43) Veröffentlichungstag der Anmeldung: 12.10.2016
(73) Patentinhaber: De Fries, Reinhold, 15232 Frankfurt (Oder) (DE)
(72) Erfinder: De Fries, Reinhold, 15232 Frankfurt (Oder) (DE)
(74) Vertreter: Brandt & Nern Patentanwälte
(86) Internationale Anmeldenummer: PCT/DE2014/100428
(87) Internationale Veröffentlichungsnummer: WO 2015/081932

(56) Entgegenhaltungen:
- WO-A1-00/11512
- US-A- 4 043 672
- US-A1- 2008 007 617
- US-A1- 2009 082 629
- SAITO H ET AL: "Compound eye shaped flexible organic image sensor with a tunable visual field", IEEE INTERNATIONAL CONFERENCE ON MICRO ELECTRO MECHANICAL SYSTEMS, IEEE, US, 30. Januar 2005 (2005-01-30), Seiten 96-99, XP010811668, DOI: 10.1109/MEMSYS.2005.1453876 ISBN: 978-0-7803-8732-4

## Beschreibung

Die Erfindung betrifft eine optische Anordnung mit mindestens zwei optischen Kanälen, welche es ermöglicht, ihre Umgebung in einem sehr großen Raumwinkel, nämlich in einem Sektor von 70 % und mehr des vollen Raumwinkels, zu erfassen oder Informationen tragende optische Signale aus beliebigen Richtungen innerhalb eines räumlichen Sektors vorgenannter Größe zu empfangen. Hierbei sind die optischen Komponenten der Anordnung aufgrund ihrer speziellen erfindungsgemäßen Ausgestaltung sehr kompakt ausgebildet.

Für unterschiedlichste Einsatzzwecke werden optische Anordnungen benötigt, welche es gestatten, ihre jeweilige Umgebung möglichst rundherum, das heißt in einem möglichst großen Raumwinkel, zu erfassen oder auf optischem Wege übertragene Informationen aus nahezu jeder beliebigen Richtung empfangen zu können. Nach dem Stand der Technik werden entsprechende Anordnungen zur Umgebungsüberwachung im Allgemeinen mit Hilfe einer Mehrzahl unterschiedlich positionierter Kameras realisiert, welche gegebenenfalls schwenk- und/oder verfahrbar sind. Die Kameras sind dabei zudem häufig mit speziellen Weitwinkelobjektiven ausgestattet. Hiermit ist jedoch ein erheblicher apparativer Aufwand verbunden, der zudem einen großen Installationsaufwand bedingt.

Andere bekannte, kompaktere Anordnungen bedienen sich eines Systems von Linsen und Spiegeln zur Strahlumlenkung. Dies ist erforderlich, um auch diejenigen Bereiche der Umgebung erfassen zu können, welche andernfalls durch Teile der Anordnung selbst oder durch Teile und Komponenten eines Systems, an welchem die Anordnung montiert ist, verdeckt werden. Auch Anordnungen der letztgenannten Art sind im Hinblick auf die Vielzahl benötigter optischer Komponenten häufig komplex und hinsichtlich ihres Raumbedarfs für bestimmte Anwendungsfälle ebenfalls nicht kompakt genug. Dabei steigt die Komplexität der Anordnungen mit der Größe des von Ihnen zu erfassenden Raumwinkels ihrer Umgebung.

Aus der US 6,028,719 ist ein System zur Erfassung eines 360°-Panoramas bekannt geworden. Das System verwendet einen Zylinder mit einer transparenten Mantelfläche, in welchen von einer Stirnseite her ein kegelförmiger Spiegel zur Strahlumlenkung eingefügt ist. Die Spitze des den Spiegel ausbildenden Kegels ragt dabei in den Zylinder hinein, so dass sich der auf der Mantelfläche des Zylinders ausgebildete Spiegel in das Innere des Zylinders hinein konisch verjüngt. Das System weist somit einen verhältnismäßig einfachen und vergleichsweise kompakten Aufbau auf. Allerdings beträgt der mittels des beschriebenen Systems erfassbare Raumwinkelbereich deutlich weniger als 70 % des vollen Raumwinkels und das System ist zudem nicht dazu ausgelegt, seine Umgebung in einem über das 360°-Panorama hinausgehenden Raumwinkelbereich zu erfassen. Hierfür wäre, insbesondere, wenn der volle oder nahezu der volle Raumwinkel erfasst werden soll, ein beträchtlicher zusätzlicher Aufwand erforderlich.

Die EP 2 433 837 A1 beschreibt ein optisches Instrument, welches für den Einsatz in landwirtschaftlichen Fahrzeugen zum Zweck der Kollisionsvermeidung vorgesehenen ist. Mittels eines mit einer Ringlinse beziehungsweise einer Gürtellinse ausgestatteten Übersichtsobjektivs wird dazu die Umgebung des Instruments in einem 360°-Panorama beobachtet. Wird hierbei mittels des Übersichtsobjektivs ein Objekt oder Hindernis erfasst, kann ein um 360° drehbares Beobachtungsobjektiv des optischen Instruments in Richtung dieses Objektes oder Hindernisses gedreht und zu diesem die Entfernung mittels des Beobachtungsobjektivs bestimmt werden. Mittels des mit der klassischen Sammellinse ausgestatteten Beobachtungsobjektivs wird dabei jeweils ein Segment des mit dem Übersichtsobjektiv erfassten 360°-Panoramas erfasst. Eine Erweiterung des mit dem Übersichtobjektiv erfassbaren Raumwinkels ist durch den Einsatz des Beobachtungsobjektivs nicht gegeben.

Aus der DD 239 468 A1 ist ein Rundlichtempfänger bekannt, mittels welchem die Umgebung in der Form eines 360° Panoramas erfassbar ist. Bei dieser Anordnung treten optische Signal über eine Gürtellinse mit einer konvexen Außenseite und einer planen Innenseite in die Anordnung ein. Mit dem Rundlichtempfänger, welcher der optischen Informationsübertragung dient, kann ausschließlich ein 360° Panorama und dies zudem nur in einer schmalen Ebene erfasst werden. Auch, wenn die beschriebene Anordnung zusätzlich mit Lichtleitblechen ausgestattet ist, welche zumindest eine eventuell toleranzbedingte leicht gekippte Anordnung des Sensors in dem Rundlichtempfänger kompensieren, muss ein empfangener Lichtstrahl bei dieser optischen Anordnung ziemlich genau auf gleicher Höhe mit der optischen Achse der Gürtellinse eingehen.

Durch die US 2009/0082629 A1 und die WO 00/11512 A1 werden optische Anordnungen zur Erfassung eines 360° Panoramas beschrieben, welche zur Vergrößerung des erfassten räumlichen Bereiches mit einem zweiten optischen Kanal ausgestattet sind. über diesen Kanal treten optische Signale aus der Umgebung der Anordnung durch eine weitere Linse in die Anordnung ein, wobei sie in der Anordnung zusammen mit den optischen Signalen des über eine Ring- oder Gürtellinse erfassten 360° Panoramas einem gemeinsamen optischen Empfängerelement zur opto-elektrischen Wandlung zugeführt werden.

Die in der ersten dieser beiden Druckschriften beschriebene Anordnung ist für den Einsatz als Teil eines in der Medizin eingesetzten Endoskops bestimmt. Eine Entzerrung oder weitergehende Korrektur der mittels der beiden optischen Kanäle erfassten Bilder der Anordnungsumgebung findet hierbei nicht statt und ist möglicherweise auch entbehrlich. Abweichend ist Bestandteil der in der WO 00/11512 A1 beschriebenen Anordnung eine digitale Korrektureinheit.

In jüngerer Zeit werden insbesondere zu militärischen Zwecken, aber auch im Rahmen ziviler Nutzung vermehrt unbemannte Flugobjekte, so genannte Drohnen eingesetzt. Beim Einsatz derartiger Fluggeräte hat es sich als nachteilig erwiesen, dass diese häufig gar nicht, aber jedenfalls in der Regel nicht mit einem wirkungsvollen, den Sicherheitsvorschriften im Luftverkehr genügenden Kollisionswarnsystem ausgestattet sind. Unabdingbarer Bestandteil eines solchen Kollisionssystems wäre eine optische Anordnung zur Erkennung sich im Flugweg des Fluggerätes befindender Objekte beziehungsweise Hindernisse, wobei deren Erkennung in einem sehr großen Raumwinkelbereich, vorzugsweise im vollen Raumwinkelbereich von 12,556 sr sehr exakt und unter Bestimmung ihrer Position beziehungsweise Koordinaten möglich sein müsste. Aus dem Stand der Technik sind bislang keine optischen Anordnungen bekannt, welche hierfür bei einer gleichzeitig kompakten Ausführung eine zufriedenstellende Lösung bieten würden.

Dies dürfte auch für die in den beiden letztgenannten Druckschriften beschriebenen Anordnungen gelten. Bei der in der US 2009/0082629 A1 beschriebenen Anordnung ist dies schon dadurch bedingt, dass bei dieser, wie bereits ausgeführt, keine Korrektur des mittels der Anordnung erfassten Abbildes der Umgebung erfolgt. Bei der in der WO 00/11512 A1 beschriebenen Anordnung ist eine solche Korrektur zwar vorgesehen. Im Hinblick auf die Effizienz und die Genauigkeit dürfte es jedoch dabei von Nachteil sein, dass bei der Anordnung ein gemeinsames Empfängerelement vorgesehen ist und daher die Korrektur für beide optischen Kanäle gemeinsam erfolgt.

Aufgabe der Erfindung ist es, eine optische Anordnung bereitzustellen, welche eine insbesondere für den Einsatz in unbemannten Flugobjekten sehr exakte Erfassung der Umgebung in einem großen Raumwinkelbereich von wenigstens 70 % des vollen Raumwinkels oder mehr bei einem gleichzeitig sehr kompakten Aufbau der Anordnung ermöglicht.

Die Aufgabe wird durch eine optische Anordnung mit den Merkmalen des Patentanspruchs 1 gelöst. Vorteilhafte Aus- beziehungsweise Weiterbildungen der Erfindung sind durch die Unteransprüche gegeben.

Bei der zur Lösung der Aufgabe vorgeschlagenen Anordnung handelt es sich um eine aus optischer Sicht mehrkanalige Anordnung. Die Anordnung weist folglich zwei oder mehr optische Kanäle auf. Jeder dieser Kanäle besteht zumindest aus wenigstens einer optischen Linse und wenigstens einem optischen Empfängerelement, wobei je optischem Kanal ein Empfängerelement vorgesehen ist. Die vorgenannte mindestens eine optische Linse jedes der optischen Kanäle dient dem Eintritt optischer Signale aus der Umgebung der Anordnung in den jeweiligen optischen Kanal und damit in die Anordnung. Darüber hinaus können aber gegebenenfalls noch weitere optische Linsen in einem oder in mehreren der optischen Kanäle angeordnet sein. Die jeweilige mindestens eine optische Linse eines jeden Kanals, welche anders als die letztgenannten optischen Linsen, dem Eintritt optischer Signale aus der Umgebung in die Anordnung dient, soll zur Unterscheidung gegebenenfalls weiterer in einem Kanal angeordneter Linsen im Weiteren auch als Eintrittslinse bezeichnet werden.

Bei dem jeweiligen optischen Empfängerelement kann es sich um einen einzelnen optischen Sensor, wie beispielsweise um ein CCD-Element, um ein Fotoelement, um einen Fototransistor oder um eine Fotodiode handeln, oder aber auch um eine Gruppe aus mehreren, zu einem Empfängerelement miteinander verschalteten optischen Sensoren. Durch das betreffende optische Empfängerelement eines optischen Kanals werden optische Signale, welche über die wenigstens eine optische Linse (Eintrittslinse) desselben Kanals in die Anordnung eintreten, empfangen und in elektrische Signale gewandelt. Zu der optischen Anordnung gehört ferner mindestens eine Verarbeitungseinheit zur Verarbeitung der elektrischen Signale der optischen Empfängerelemente.

Erfindungsgemäß weist mindestens einer der optischen Kanäle der Anordnung eine Gürtellinse zum Eintritt optischer Signale, also als Eintrittslinse, auf. Darüber hinaus weist mindestens ein anderer optischer Kanal der Anordnung eine klassische Sammellinse als Eintrittslinse für den Eintritt optischer Signale in die Anordnung auf. Zudem weist die optische Achse jeder als Eintrittslinse eines optischen Kanals angeordneten klassischen Sammellinse gegenüber der optischen Achse jeder als Eintrittslinse eines optischen Kanals angeordneten Gürtellinse einen vom Nullwinkel verschiedenen Winkel auf. Demgemäß ist die Gestaltung der optischen Kanäle, nämlich die Art der Anordnung ihrer jeweiligen Eintrittslinsen zueinander dabei derart, dass mit jedem weiteren optischen Kanal und folglich mit jeder weiteren, bei der Anordnung als Eintrittslinse eines optischen Kanals vorgesehenen optischen Linse der mittels der Anordnung erfassbare Raumwinkel jeweils vergrößert wird. Zu den hierdurch hinsichtlich der erfassbaren Raumbereiche beziehungsweise Raumwinkel gegebenen Möglichkeiten sollen an späterer Stelle in beispielhafter Form Angaben gemacht werden.

Im Kontext der vorstehenden Ausführungen sowie der sonstigen Erfindungsbeschreibung und der Patentansprüche soll unter einer Gürtellinse eine Linse verstanden werden, deren Linsenkörper durch eine vollständige Rotation der Querschnittsfläche einer konventionellen beziehungsweise klassischen sphärischen oder asphärischen Sammellinse um eine gleichzeitig die Symmetrieachse der Gürtellinse ausbildende Rotationsachse entsteht. Diese vollständige Rotation ist derart, dass die Querschnittsfläche der vorgenannten klassischen Sammellinse mit einem Radius um die Rotationachse rotiert, welcher durch eine vom Flächenschwerpunkt dieser Querschnittsfläche orthogonal zur Rotationsachse der Gürtellinse verlaufende Verbindung gebildet wird. Die optische Achse der Gürtellinse kann dabei orthogonal oder in einem davon abweichenden Winkel, nicht jedoch parallel zu ihrer Rotations- und Symmetrieachse verlaufen. Wie ausgeführt, entspricht die Querschnittfläche der Gürtellinse beziehungsweise, genauer gesagt, jede der Schar aller um die Rotationsachse angeordneter, zueinander kongruenter Querschnittsflächen der Querschnittsfläche einer klassischen Sammellinse. Die Querschnittsflächen sind bei allen im Kontext der Erfindung angesprochenen Gürtellinsen bikonvex ausgebildet. Ist dabei die Mantelfläche der Gürtellinse derart gekrümmt, dass die der Umgebung der Anordnung zugewandte Konturlinie dieser Querschnittsflächen eine kreisförmige Krümmung aufweist, verhält sich die Linse vergleichbar einer sphärischen Sammellinse. Andernfalls, also im Falle dessen das die besagte Konturlinie eine von der Kreisform abweichende Krümmung aufweist, ist sie aus optischer Sicht mit einer asphärischen Sammellinse vergleichbar. Längsschnitte durch eine wie zuvor beschrieben charakterisierte Gürtellinse bilden kreisringförmige Flächen, vergleichbar einer Meniskuslinse deren Meniskus konzentrisch zur Rotations- beziehungsweise Symmetrieachse der Gürtellinse angeordnet ist.

Entsprechend möglicher Ausbildungsformen der Anordnung kann die mindestens eine als Eintrittslinse eines optischen Kanals angeordnete Gürtellinse auch nach dem Fresnel-Prinzip ausgebildet sein. Hierbei ist die konvexe Wölbung der äußeren Mantelfläche der Gürtellinse bzw. sind die der Umgebung zugewandten Konturlinien der Schar aller um die Rotationsachse der Linse angeordneten Querschnittsflächen stufig profiliert. Hierdurch lässt sich bei gleichzeitig kurzer Brennweite die Dicke der Linse und damit ihr Gewicht sowie letztlich das Gewicht der Anordnung reduzieren.

Im Hinblick darauf, dass vorstehend und in den Patentansprüchen jeweils von mindestens einem beziehungsweise wenigstens einem optischen Empfängerelement je optischem Kanal gesprochen wird, sei an dieser Stelle angemerkt, dass jeder Kanal in der Regel ein (gegebenenfalls auch gemeinsam mit anderen optischen Kanälen genutztes) Empfängerelement aufweisen wird. Darüber hinaus ist es aber auch denkbar das ein oder mehrere optische Kanäle noch weitere optische Empfängerelemente aufweisen, welche (zusätzlich) andere als die nachfolgend beschriebenen Funktionen erfüllen. Vor dem Hintergrund der hier näher beschriebenen Funktionen soll nachfolgend, sprachlich vereinfachend im Allgemeinen von einem Empfängerelement gesprochen werden. Dabei umfassen aber die insoweit vorgestellten Ausbildungsformen der Anordnung immer auch die Möglichkeit, dass in einem oder mehreren Kanälen mehrere optische Empfängerelemente (gegebenenfalls zur Erfüllung von Zusatzaufgaben, wie beispielsweise einer Lichtstärkemessung und dergleichen) vorgesehen sind. Ähnliches gilt in Bezug auf die mindestens eine Verarbeitungseinheit, die gegebenenfalls aus mehreren der Verarbeitung der elektrischen Signale dienenden Einzelkomponenten bestehen kann, wobei nachfolgend ebenfalls vereinfachend von einer beziehungsweise der Verarbeitungseinheit gesprochen werden soll.

Wie bereits ausgeführt, verfügt jeder optische Kanal der erfindungsgemäßen, insbesondere für die Raumüberwachung, also zur Erfassung eines Abbildes der Anordnungsumgebung oder zur Erkennung von Objekten in dieser Umgebung vorgesehenen Anordnung über mindestens ein eigenes optisches Empfängerelement, nämlich über ein nur die über den jeweiligen Kanal in die Anordnung eintretenden optischen Signale in elektrische Signale wandelndes Empfängerelement. Die Verarbeitungseinheit der Anordnung hinsichtlich ihrer hard- und/oder softwaremäßigen Beschaffenheit zweistufig ausgebildet. Dabei ist die erste Stufe der Verarbeitungseinheit für eine in Bezug auf die einzelnen optischen Kanäle separate Korrektur und Entzerrung der durch die elektrischen Signale der optischen Empfängerelemente der Kanäle repräsentierten optischen Signale ausgebildet. Die zweite Stufe der Verarbeitungseinheit ist für eine Vernetzung der Ausgangssignale der ersten Stufe mit dem Ziel der Erzeugung eines räumlichen Abbildes der Umgebung der erfindungsgemäßen Anordnung ausgebildet.

Um es nochmals zu verdeutlichen: Jeder optische Kanal der Anordnung weist mindestens ein eigenes optisches Empfängerelement auf, welchem die über die mindestens eine Eintrittslinse desselben optischen Kanals in die Anordnung eintretenden optischen Signale zur Wandlung in elektrische Signale zugeführt werden. Die elektrischen Signale der optischen Empfängerelemente der einzelnen optischen Kanäle, welche die über die Eintrittslinse des jeweiligen optischen Kanals eintretenden optischen Signale beziehungsweise das optische Abbild des von der betreffenden Eintrittslinse erfassten Teils der Umgebung der Anordnung repräsentieren, werden im Hinblick auf die in den einzelnen optischen Kanälen zum Einsatz gelangenden unterschiedlichen Linsenformen zunächst voneinander separat ausgewertet. Dies geschieht, um die in einem jeweiligen Kanal entstehenden Abbildungsfehler und die durch die jeweilige Linse oder Linsen des Kanals entstehenden Verzerrungen voneinander unabhängig korrigieren zu können. Erst nach dieser Korrektur beziehungsweise Entzerrung werden die elektrischen Signale der optischen Empfängerelemente durch die zweite Stufe der Verarbeitungseinheit zu einem gemeinsamen optischen Abbild der gesamten von der erfindungsgemäßen Anordnung erfassten Umgebung zusammengeführt. Um dies gewährleisten zu können, müssen die optischen Empfängerelemente der einzelnen optischen Kanäle der Anordnung auch in geeigneter Weise voneinander physisch getrennt ausgebildet sein. Je nachdem, wie hierbei die einzelnen Empfängerelemente angeordnet sind, werden ihnen die über die zugehörige Eintrittslinse eintretenden optischen Signale direkt, dabei zwar gegebenenfalls über weitere Linsen, oder indirekt, das heißt über in den Strahlengang zwischen der Eintrittslinse und dem Empfängerelement zur Strahlenumlenkung angeordnete reflektierende Elemente beziehungsweise Spiegel zugeführt.

Aus der verfahrensbezogenen Sicht betrachtet liegt der vorgestellten erfindungsgemäßen Lösung die Überlegung zugrunde, die räumliche Umgebung über mehrere, nämlich mindestens zwei optische Kanäle zu erfassen, wobei für einen oder mehrere der Kanäle zur Erfassung eines 360°-Panoramas eine Gürtellinse verwendet wird und weitere, mittels dieses Kanals oder dieser Kanäle nicht erfassbare Umgebungsbereiche mit Hilfe einer oder mehrerer, nämlich zweier klassischer Sammellinsen zu erfassen, welche auf einer oder beiden Stirnseiten der Gürtellinse, das heißt orthogonal zu deren Symmetrie- und Rotationsachse angeordnet wird beziehungsweise werden. Im Falle einer Ausbildung der Anordnung mit mehreren optischen Kanälen, die eine Gürtellinse als Eintrittslinse aufweisen, wird beziehungsweise werden die deren erfassbaren Raumwinkel erweiternde(n) klassische(n) Sammellinse(n) im Polbereich einer Halbkugel beziehungsweise in den Polbereichen einer Kugel angeordnet, die durch mehrere, verschiedene Durchmesser und unterschiedliche Neigungen ihrer optischen Achse zu der Rotationsachse der Anordnung aufweisende Gürtellinsen ausgebildet ist.

Hinsichtlich einer Erfassung eines Abbildes der Anordnungsumgebung oder der Erkennung von Objekten in dieser Umgebung liegt der Erfindung aus verfahrensbezogener Sicht ferner die Überlegung zugrunde, die aufgrund der unterschiedlichen optischen Eigenschaften der verwendeten verschiedenen Linsen mit unterschiedlichen Fehlern und Verzerrungen behafteten, durch die elektrischen Signale der zugehörigen optischen Empfänger repräsentierten, die Umgebung abbildenden optischen Signale zunächst voneinander getrennt zu korrigieren und zu entzerren und erst dann die elektrischen Signale aller optischen Empfänger, das heißt aller optischen Kanäle, zu einem räumlichen Gesamtabbild der Umgebung der Anordnung zusammenzuführen. Was die in der zweiten Stufe der Verarbeitungseinheit erfolgende Erzeugung eines räumlichen Abbilds der Umgebung der Anordnung anbelangt, so kann es sich hierbei um ein als reales Kamerabild wiedergebbares Abbild handeln oder auch um ein Abbild, welches lediglich die räumlichen Koordinaten sich in der Umgebung der Anordnung befindender Objekte wiedergibt.

Bei einer zweikanaligen Ausführung der erfindungsgemäßen Anordnung kann beispielsweise das mit der, vorzugsweise eine asphärische Querschnittsfläche aufweisenden Gürtellinse gemeinsam einen optischen Kanal ausbildende optische Empfängerelement zylinderförmig, das heißt in Form der Mantelfläche eines Zylinders, ausgebildet sein. Das Empfängerelement des anderen beziehungsweise zweiten optischen Kanals, bei welchem die optischen Signale entsprechend dem grundsätzlichen Aufbau der erfindungsgemäßen Anordnung über eine klassische, vorzugsweise asphärische Sammellinse in die Anordnung eintreten, ist hierbei als eine ebene Fläche ausgebildet und an oder parallel zu der Stirnfläche des zylinderförmigen optischen Empfängerelements des ersten Kanals angeordnet.

Eine solche zweikanalige Ausbildungsform, bei welcher die optischen Signale über einen Kanal durch eine Gürtellinse in die Anordnung eintreten, ermöglicht eine Erfassung der Anordnungsumgebung in einem Raumwinkelbereich, der ca. 10,7 sr und damit mehr als 85 % des vollen Raumwinkels beträgt. Dabei werden über die Gürtellinse ca. 8,9 sr erfasst, was mehr als 70 % des Vollraumwinkels, also mehr als dem 1,4-fachen des hemisphärischen Raums entspricht.

Eine andere, kein zylinderförmiges Empfängerelement verwendende Variante dieser, der Umgebungsüberwachung dienenden Ausbildungsform mit zwei optischen Kanälen ist so gestaltet, dass die optischen Empfängerelemente beider Kanäle in einer gemeinsamen Ebene angeordnet sind. Hierbei sind dann die beiden ebenen optischen Empfängerelemente außerdem so angeordnet, dass eines der Empfängerelemente das andere konzentrisch umgibt. Näheres dazu soll später noch im Rahmen eines Ausführungsbeispiels erläutert werden.

Im Falle der zuvor beschriebenen Ausführung mit einem zylinderförmigen Empfängerelement in dem die Gürtellinse aufweisenden optischen Kanal kann die optisch empfindliche Fläche, das heißt die Mantelfläche des zylinderförmigen Empfängerelements, beispielsweise durch eine Mehrzahl, die Mantelfläche vollständig bedeckender einzelner, jedoch miteinander verschalteter Sensoren ausgebildet sein.

Gemäß einer besonders bevorzugten Weiterbildung handelt es sich jedoch bei dem entsprechenden zylinderförmigen optischen Empfängerelement um ein einziges, die Mantelfläche vollständig bedeckendes organisches CCD-Element. Ein solches, aus organischen Halbleitern, wie insbesondere aus Halbleitern mit längerkettigen Polymeren bestehendes CCD-Element hat gegenüber aus anorganischen, kristallinen Materialien bestehenden CCD-Elementen den Vorteil, dass es bezüglich seiner Form vergleichsweise biegsam und flexibel ist. Hierbei ist es möglich, das organische CCD-Element unmittelbar in eine zylindrische Form zu bringen. Durch die Verwendung eines solchen organischen CCD-Elements als dem optischen Empfängerelement vereinfacht sich insbesondere in erheblichem Maße die Beschaltung zum Abgreifen der durch Wandlung der optischen Signale entstehenden elektrischen Signale. Selbstverständlich können gegebenenfalls auch das oder die Empfängerelemente des oder der mit einer klassischen Sammellinse ausgestatteten optischen Kanäle als Sensoren aus organischen Halbleitermaterialen ausgebildet sein.

Anhand von Zeichnungen sollen nachfolgend Ausführungsbeispiele und Details der Erfindung dargestellt werden, wobei sich die Zeichnungen auf die Darstellung der optischen Komponenten beziehungsweise Details möglicher Ausbildungsformen der erfindungsgemäßen Anordnung beschränken. Die Zeichnungen zeigen im Einzelnen:
- Fig. 1a:: eine mögliche Ausbildungsform der erfindungsgemäßen Anordnung mit zwei optischen Kanälen,
- Fig. 1b:: eine Einzelheit der Anordnung gemäß Fig. 1a,
- Fig. 1c:: eine Ergänzungseinheit für die Anordnung gemäß Fig. 1a,
- Fig. 2a:: eine modifizierte Variante der zweikanaligen Ausbildungsform gemäß Fig. 1a,
- Fig. 2b:: eine Ergänzungseinheit für die Anordnung gemäß Fig. 2a,
- Fig. 3a: eine weitere Ausbildungsform der erfindungsgemäßen Anordnung mit drei optischen Kanälen,
- Fig. 3b: eine Einzelheit der Anordnung gemäß Fig. 3a,
- Fig. 4:: eine Ausbildungsform der erfindungsgemäßen Anordnung mit einer größeren Zahl optischer Kanäle,
- Fig. 5:: eine mögliche Ausführung eines hohlzylindrischen optischen Empfängerelements für eine Anordnung gemäß Fig. 1a.

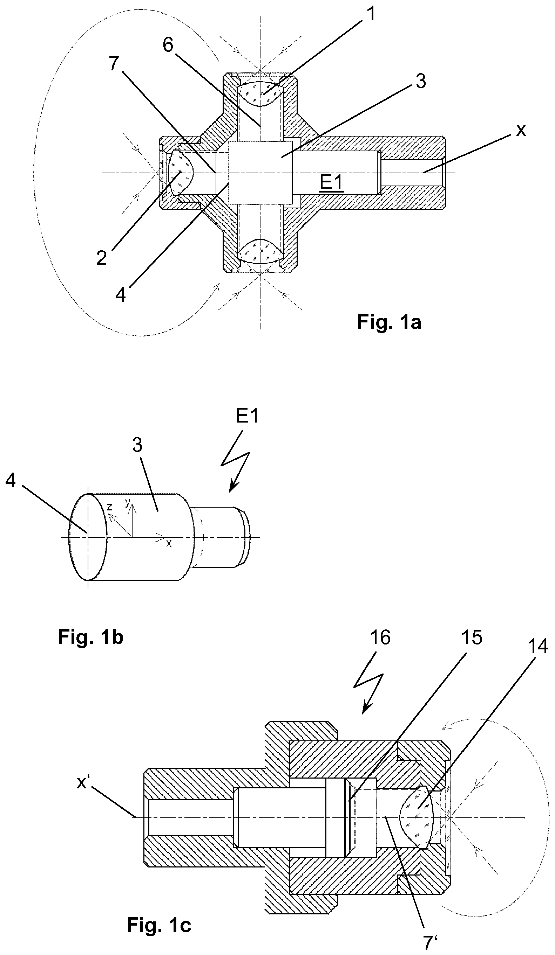

Die Figur 1a zeigt eine mögliche Ausbildungsform der Erfindung. Es handelt sich hierbei um eine der Beobachtung der Umgebung dienende optische Anordnung mit zwei optischen Kanälen und mit je einem eigenen optischen Empfängerelement je Kanal. Alle optischen Elemente der Anordnung werden gemäß dem Beispiel durch ein gemeinsames Gehäuse aufgenommen. Die bezüglich der Achse x rotationssymmetrische Anordnung ist in der Fig. 1a in einer geschnittenen Darstellung gezeigt. In der Zeichnung wurde, wie auch in allen anderen Figuren, auf die Darstellung einer ebenfalls zu der optischen Anordnung gehörenden Verarbeitungseinheit verzichtet.

Ein erster optischer Kanal der Anordnung gemäß der Fig. 1 a ist durch eine Eintrittslinse, nämlich die Gürtellinse 1, über welche optische Signale in die Anordnung eintreten, sowie durch ein zugehöriges Empfängerelement 3 ausgebildet.

Die Gürtellinse 1 weist eine Querschnittsfläche vergleichbar einer asphärischen Sammellinse (Details der nach dem Fresnelprinzip gestalteten äußeren Oberfläche der Gürtellinse sind in der Zeichnung nicht dargestellt) auf. Bei dem optischen Empfängerelement 3 des ersten optischen Kanals handelt es sich, wie aus der Figur ersichtlich, um ein zylinderförmiges Empfängerelement 3, welchem die über die Gürtellinse 1 eintretenden optischen Signale unmittelbar zugeführt werden. Zwischen der Gürtellinse 1 und dem optischen Empfängerelement 3 sind demnach keinerlei reflektierende beziehungsweise strahlenumlenkende Elemente in den Strahlengang eingefügt. Genauer ausgeführt handelt es sich bei dem optischen Empfängerelement 3 um ein hohlzylindrisches Element mit einer fotoempfindlichen äußeren Mantelfläche, welche beispielsweise durch einen einzigen, die Mantelfläche ausbildenden Sensor oder durch eine Mehrzahl, die Mantelfläche vollständig bedeckender optischer Sensoren ausgebildet ist.

Ein zweiter optischer Kanal der Anordnung ist durch eine Eintrittslinse, nämlich die klassische asphärische Sammellinse 2 mit der optischen Achse 7 und durch ein weiteres optisches Empfängerelement 4 ausgebildet, welches an der Stirnseite des von dem optischen Empfängerelement 3 des ersten optischen Kanals ausgebildeten Hohlzylinders angeordnet ist. In den optischen Empfängerelementen 3, 4 werden die über die zugehörigen Eintrittslinsen, das heißt über die Gürtellinse 1 und über die klassische asphärische Sammellinse 2, ihres jeweiligen optischen Kanals in die Anordnung eintretenden optischen Signale in elektrische Signale gewandelt. Die resultierenden elektrischen Signale werden schließlich der nicht gezeigten Verarbeitungseinheit zugeführt. Wesentlich ist es, dass die Verarbeitungseinheit bei dieser Ausbildungsform der Erfindung aufgrund einer entsprechenden hard- und/oder softwaremäßigen Beschaffenheit so ausgebildet ist, dass die elektrischen Signale der einzelnen, vorliegend der beiden optischen Kanäle in zwei Stufen ausgewertet werden. In einer ersten Stufe wird dabei separat für jeden Kanal eine Korrektur und Entzerrung der durch die elektrischen Signale des jeweiligen optischen Empfängerelements 3, 4 des betreffenden Kanals repräsentierten optischen Signale vorgenommen. Hierdurch werden Abbildungsfehler und Verzerrungen, welche durch die spezielle Form der zum jeweiligen Kanal gehörenden Linse bedingt sind, korrigiert. Erst nach dieser für jeden optischen Kanal separat erfolgenden Korrektur werden die die optischen Signale repräsentierenden elektrischen Signale in einer zweiten Stufe der Verarbeitungseinheit im Sinne einer Vernetzung zur Erzeugung eines räumlichen Abbildes der Umgebung der Anordnung zusammengeführt. Die Erzeugung des räumlichen Abbildes der Umgebung der Anordnung kann dabei dergestalt sein, dass die Umgebung auf einem geeigneten Display gewissermaßen als reales Kamerabild wiedergegeben wird, sie kann sich aber auch darauf beschränken, die räumlichen Koordinaten sich in der Umgebung der Anordnung befindender Objekte zu bestimmen.

Die Fig. 1b zeigt die Einzelheit E1 der Fig. 1a in einer räumlichen Darstellung. Hier ist noch einmal die Form und die Art der Anordnung der zu den beiden optischen Kanälen gehörenden optischen Empfängerelemente 3, 4 gut zu erkennen. Demnach handelt es sich bei dem optischen Empfängerelement 3, welches gemeinsam mit der Gürtellinse 1 der Anordnung gemäß Fig. 1a einen optischen Kanal ausbildet, um ein zylinderförmiges, genauer gesagt um ein hohlzylindrisches Empfängerelement 3. Die gesamte äußere Mantelfläche des entsprechenden Zylinders ist dabei fotoempfindlich ausgelegt. Bei dem optischen Empfängerelement 4 des zweiten optischen Kanals, welcher durch dieses Empfängerelement 4 und die klassische asphärische Sammellinse 2 gebildet ist, handelt es sich um einen flachen beziehungsweise ebenen optischen Sensor. Dieser ist bei dem gezeigten Beispiel unmittelbar an der Stirnseite des das optische Empfängerelement 3 des ersten Kanals ausbildenden hohlzylindrischen Elements angeordnet. Denkbar wäre es aber auch, das zweite Empfängerelement 4 im geringen Abstand zu dem Hohlzylinder des ersten optischen Empfängerelements 3 anzuordnen. In jedem Falle sind jedoch die Ebenen der optisch empfindlichen Flächen beider Empfängerelemente 3, 4 ebenso wie die optischen Achsen 6, 7 (siehe Fig. 1a) der jeweiligen mit ihnen gemeinsam einen optischen Kanal ausbildenden Linsen, respektive Eintrittslinsen, orthogonal zueinander angeordnet.

Mit der Anordnung gemäß der Fig. 1 a lässt sich deren Umgebung in einem Raumwinkelbereich von etwa 85 % des vollen Raumwinkels und somit in einem Raumwinkelbereich von ca. 10,7 sr erfassen. Die Fig. 1c zeigt eine Ergänzungseinheit 16 für die Anordnung gemäß der Fig. 1a, wobei eine aus der Kombination der Ergänzungseinheit 16 mit der Anordnung nach der Fig. 1a resultierende Anordnung eine Erfassung der Umgebung im vollen Raumwinkel von 12,566 sr ermöglicht. Hierzu wird die Ergänzungseinheit 16 gemäß der Fig. 1c an einem mit der Anordnung gemäß der Fig. 1a ausgestatteten Objekt so angeordnet, dass die Rotationsachsen x, x' der Anordnung nach Fig. 1a und der Ergänzungseinheit 16 zusammenfallen. Durch die Ergänzungseinheit 16 wird dabei ein dritter optischer Kanal ausgebildet, welcher vorzugsweise bezüglich seiner optischen Komponenten in gleicher Weise ausgestattet ist, wie der zweite optische Kanal, das heißt, durch eine klassische asphärische Sammellinse 14 als Eintrittslinse und ein flaches beziehungsweise ebenes optisches Empfängerelement 15 ausgebildet ist.

Aufgrund des Zusammenfallens der Rotationsachsen x, x' fallen die optische Achse 7 der Sammellinse 2 und die optische Achse 7' der Sammellinse 14 ebenfalls zusammen. Beide optischen Achsen 7, 7' verlaufen demnach orthogonal zu der optischen Achse 6 der Gürtellinse 1. Auch die Signale des optischen Empfängerelements 15 der Ergänzungseinheit 16 werden im Hinblick auf eine Korrektur und Entzerrung zunächst in der ersten Stufe der (nicht gezeigten) Verarbeitungseinheit gesondert ausgewertet und dann in der zweiten Stufe mit den Signalen der beiden anderen optischen Kanäle zusammengeführt. Die Ergänzungseinheit 16 kann unmittelbar auf der der asphärischen Sammellinse 2 des zweiten optischen Kanals der Anordnung gemäß Fig. 1a gegenüberliegenden Seite angeordnet oder aber gegenüber der Anordnung gemäß der Fig. 1 a beabstandet sein. Im Falle eines größeren Abstandes zwischen der Anordnung gemäß der Fig. 1 a und der Ergänzungseinheit 16 gemäß Fig. 1c wird dieser Abstand, sofern die daraus resultierende Gesamtanordnung zur Erstellung eines räumlichen Abbildes ihrer gesamten Umgebung genutzt wird, bei der Vernetzung der Ausgangssignale der ersten Stufe für die drei optischen Kanäle im Zuge der Verarbeitung der entsprechenden Daten mit berücksichtigt.

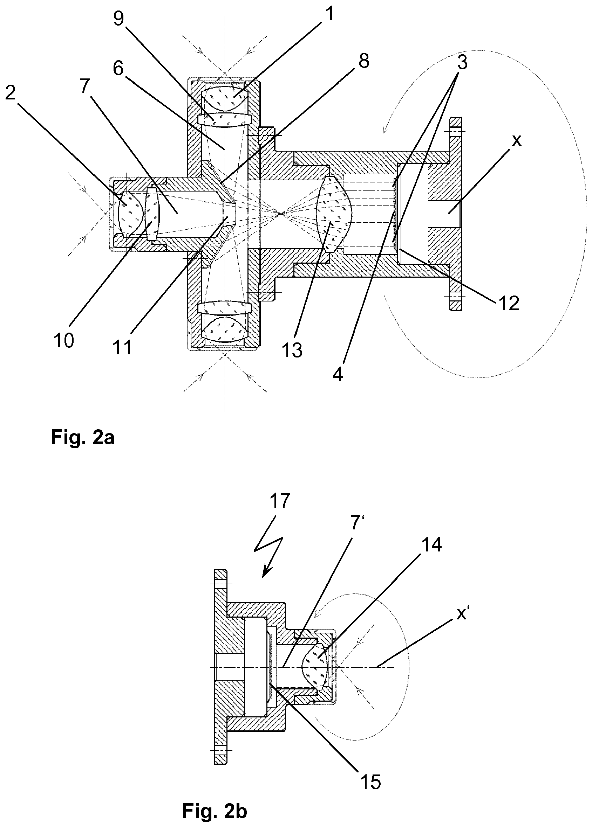

Die Fig. 2a zeigt die Ausbildungsform gemäß der Fig. 1a in einer modifizierten Variante. Hierbei werden die, über die eine Querschnittsfläche vergleichbar einer asphärischen Sammellinse aufweisende Gürtellinse 1 des ersten optischen Kanals in die Anordnung eintretenden optischen Signale nicht unmittelbar einem zylinderförmigen Empfängerelement zugeführt. Vielmehr ist in den Strahlengang ein Reflektor 8 in Form eines kegelstumpfförmigen Spiegels eingefügt. Das der Gürtellinse 1 zugeordnete und mit ihr gemeinsam den ersten optischen Kanal ausbildende optische Empfängerelement 3 ist hierbei mit dem Empfängerelement 4 des anderen optischen Kanals in einer gemeinsamen Ebene und zu diesem Empfängerelement 4 konzentrisch angeordnet. Bei dem zweiten optischen Kanal treten die optischen Signale wiederum über eine klassische asphärische Sammellinse 2 in die Anordnung ein. Bei beiden optischen Kanälen ist den Eintrittslinsen, über welche die optische Signale in die Anordnung eintreten - also einerseits der Gürtellinse 1 und andererseits der klassischen asphärischen Sammellinse 2 - eine zusätzliche Linse, nämlich einerseits eine Gürtellinse 9 mit einer Querschnittsfläche vergleichbar einer sphärischen Sammellinse und andererseits eine klassische sphärische Sammellinse 10, nachgeordnet. Zudem ist zwischen dem Reflektor 8 und den optischen Empfängerelementen 3, 4 eine weitere klassische asphärische Sammellinse 13 angeordnet. Auch die Anordnung gemäß der Fig. 2a kann mit einer Ergänzungseinheit 17 zur Realisierung eines weiteren, in diesem Falle dritten optischen Kanals kombiniert werden, wodurch sich eine weitere Vergrößerung des erfassbaren Raumwinkels ergibt. Eine in ihrer Ausführung geringförmig von der Ergänzungseinheit 16 gemäß der Fig. 1 c abweichende Ergänzungseinheit 17 mit einer Sammellinse 14 und einem optischen Empfängerelement 15 zur Ausbildung eines dritten optischen Kanals ist in der Fig. 2b gezeigt. Auch hierbei werden die Anordnung gemäß der Fig. 2a und die Ergänzungseinheit 17 so miteinander kombiniert, dass ihre Rotationsachsen x, x' und somit die optische Achse 7 der Sammellinse 2 sowie die optische Achse 7' der Sammellinse 14 zusammenfallen.

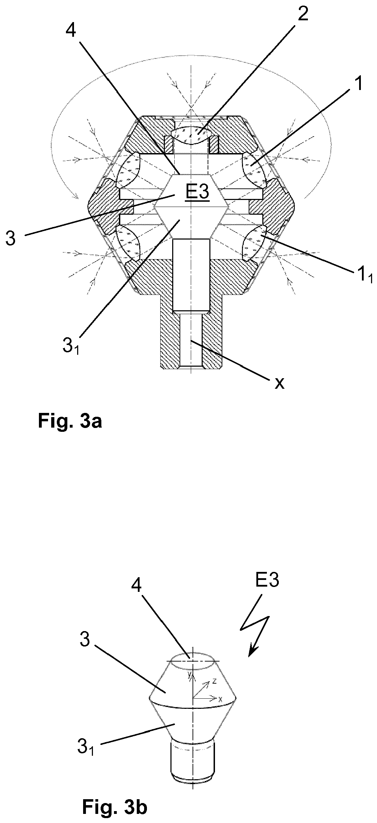

Die Fig. 3a zeigt eine weitere Ausbildungsform der erfindungsgemäßen Anordnung. Auch hier ist die zur Achse x rotationssymmetrische Anordnung in einer Schnittdarstellung gezeigt. Bei dieser Ausbildungsform weist die Anordnung bereits grundsätzlich drei optische Kanäle auf. Zwei der optischen Kanäle sind durch jeweils eine Gürtellinse 1, 1₁ mit einer Querschnittsfläche vergleichbar einer asphärischen Sammellinse und jeweils ein zugeordnetes optisches Empfängerelement 3, 3₁ ausgebildet. Die optischen Empfängerelemente 3, 3₁ sind bei dieser Anordnung jeweils auf der Mantelfläche beziehungsweise durch die Mantelfläche eines Kegelstumpfes ausgebildet, wobei die großen Grundflächen der Kegelstümpfe beider optischen Empfängerelemente 3, 3₁ zusammengeführt sind. Gemäß dem grundsätzlichen Gedanken der Erfindung, ist der dritte optische Kanal wiederum durch eine klassische, hier asphärische Sammellinse 2 und ein zugehöriges flaches und ebenes optisches Empfängerelement 4 gebildet. Das letztgenannte optische Empfängerelement 4 ist, wie aus der Zeichnung ersichtlich, an der den kleineren Querschnitt aufweisenden Stirnseite des Kegelstumpfes angeordnet, dessen Mantelfläche das optische Empfängerelement 3 des ersten optischen Kanals aufnimmt beziehungsweise ausbildet. In der Fig. 3b ist in Form der herausgezogenen Einzelheit E3 nochmals die Form und Anordnung der einzelnen optischen Empfängerelemente 3, 3₁, 4 verdeutlicht.

Auch die optische Anordnung gemäß der Fig. 3a kann wiederum mit einer Ergänzungseinheit 16, 17 entsprechend der Fig. 1c oder der Fig. 2b kombiniert werden, wobei für die räumliche Anordnung der Ergänzungseinheit 16, 17 im Verhältnis zu der Anordnung gemäß der Fig. 3a dieselben, im Zusammenhang mit der Fig. 1c erläuterten Grundsätze gelten. Aus der Kombination einer Anordnung gemäß der Fig. 3a mit einer Ergänzungseinheit 16, 17 entsprechend der Fig. 1c oder der Fig. 2b resultiert dann eine optische Anordnung mit vier optischen Kanälen, welche wiederum eine Umgebungsbeobachtung im vollen Raumwinkelbereich von 12,566 sr ermöglicht.

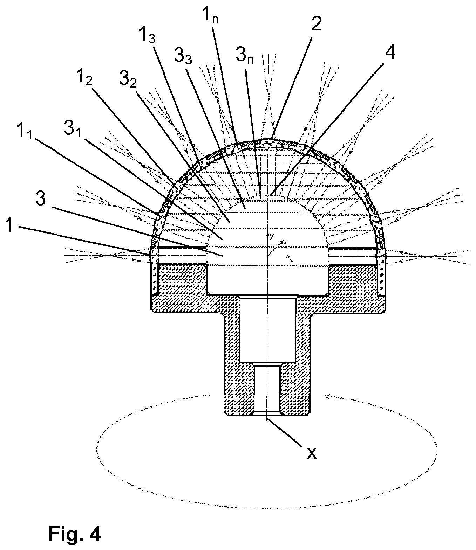

Die Fig. 4 zeigt eine ebenfalls rotationssymmetrische Ausbildungsform der erfindungsgemäßen optischen Anordnung, welche sechs optische Kanäle umfasst. Es handelt sich hierbei um fünf optische Kanäle, bei welchen die optischen Signale jeweils über eine Gürtellinse 1- 1ₙ mit einer Querschnittsfläche vergleichbar einer sphärischen Sammellinse in die Anordnung eintreten und um einen optischen Kanal, bei dem die Eintrittslinse als klassische, hier sphärische Sammellinse 2 ausgebildet ist, deren optische Achse 7 gegenüber allen optischen Achsen 6 - 6ₙ der als Gürtellinsen 1- 1ₙ ausgebildeten Eintrittslinsen in einem vom Nullwinkel verschiedenen Winkel verläuft. Auch hierbei ist jeweils jeder Eintrittslinse, das heißt jedem optischen Kanal, ein eigenes optisches Empfängerelement 3 - 3ₙ, 4 zugeordnet. Der mittels dieser Ausbildungsform der Anordnung erfassbare Raumwinkelbereich kann auf den Vollraumwinkel von 12,556 sr erweitert werden, indem diese auf der dem Pol mit der Sammellinse 2 gegenüberliegenden Seite um eine identische Anordnung erweitert wird, deren als klassische Sammellinse ausgebildeter Pol diametral zur Sammellinse 2 angeordnet wird, wobei zudem die Symmetrie- beziehungsweise Rotationsachse einer solchen Erweiterungseinheit mit der Achse x zusammenfällt.

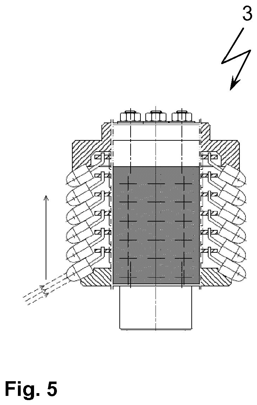

Die Fig. 5 zeigt schließlich noch eine mögliche Ausführung des hohlzylindrischen Empfängerelements 3 des ersten optischen Kanals der Anordnung gemäß der Fig. 1a. hierbei ist auf der äußeren Mantelfläche eines Zylinders in Zeilen und Spalten benachbart eine größere Zahl optischer Sensoren, beispielsweise von Fotodioden angeordnet. Entsprechend einer bevorzugten, hier nicht dargestellten Ausbildungsform wird aber ein solches hohlzylinderförmiges Empfängerelement 3 vorzugsweise mittels eines aus organischen Materialien bestehenden biegsamen optischen Sensors realisiert, welcher die gesamte Mantelfläche des Hohlzylinders ausbildet oder bedeckt.

## Patentansprüche

1. Optische Anordnung mit
- mindestens zwei optischen Kanälen, jeweils mindestens bestehend aus wenigstens einer optischen Linse, nämlich einer Eintrittslinse, über welche optische Signale in den Kanal und damit in die Anordnung eintreten und aus wenigstens einem optischen Empfängerelement (3 - 3ₙ, 4, 15), welches über die wenigstens eine optische Linse des jeweiligen optischen Kanals in die Anordnung eintretende optische Signale empfängt und in elektrische Signale wandelt,
- mindestens einer Verarbeitungseinheit zur Verarbeitung elektrischer Signale optischer Empfängerelemente (3 - 3ₙ, 4, 15),
**dadurch gekennzeichnet,**
a.) **dass** mindestens einer der optischen Kanäle als Eintrittslinse eine Gürtellinse (1 - 1ₙ) mit einer optischen Achse (6 - 6ₙ) aufweist und
b.) **dass** mindestens ein anderer optischer Kanal als Eintrittslinse eine klassische Sammellinse (2, 14) mit einer optischen Achse (7, 7') aufweist und
c.) **dass** mindestens ein optisches Empfängerelement (3 - 3ₙ, 4, 15) je optischem Kanal angeordnet ist
d.) **dass** die optische Achse (7, 7') jeder als Eintrittslinse eines optischen Kanals angeordneten klassischen Sammellinse (2, 14) gegenüber der optischen Achse (6 - 6n) jeder als Eintrittslinse eines optischen Kanals angeordneten Gürtellinse (1 - 1ₙ) der Anordnung einen vom Nullwinkel verschiedenen Winkel aufweist und
e.) **dass** die mindestens eine Verarbeitungseinheit hinsichtlich ihrer hard- und/oder softwaremäßigen Beschaffenheit zweistufig ausgebildet ist, nämlich mit einer ersten Stufe für eine in Bezug auf die einzelnen optischen Kanäle separate Korrektur und Entzerrung der durch die elektrischen Signale der optischen Empfängerelemente (3 - 3ₙ, 4, 15) der optischen Kanäle repräsentierten optischen Signale und mit einer zweiten Stufe für eine Vernetzung der Ausgangssignale der ersten Stufe zur Erzeugung eines räumlichen Abbildes der Umgebung der Anordnung.

2. Anordnung nach Anspruch 1, **dadurch gekennzeichnet, dass** die äußere Mantelfläche der mindestens einen Gürtellinse (1 - 1ₙ), nämlich ihre der äußeren Umgebung der Anordnung zugwandte gekrümmte Außenfläche, über welche die optischen Signale in die Anordnung eintreten, nach dem Fresnel-Prinzip profiliert ist.

3. Anordnung nach Anspruch 1 oder 2, mit zwei optischen Kanälen, **dadurch gekennzeichnet, dass** die Linsen, durch welche hindurch die optischen Signale über je einen der beiden optischen Kanäle in die Anordnung eintreten so angeordnet sind, dass ihre optischen Achsen (6, 7) zueinander orthogonal verlaufen.

4. Anordnung nach Anspruch 3, **dadurch gekennzeichnet, dass** ein optisches Empfängerelement (3) des mit der Gürtellinse (1) ausgestatteten optischen Kanals an oder durch die Oberfläche eines Hohlzylinders ausgebildet und ein optisches Empfängerelement (4) des anderen optischen Kanals auf einer ebenen Außenfläche einer Scheibe angeordnet ist, welche ihrerseits eine Stirnfläche des zylinderförmigen optischen Empfängerelements (3) ausbildet oder parallel zu einer Stirnseite des zylinderförmigen optischen Empfängerelements (3) angeordnet ist.

5. Anordnung nach Anspruch 3, **dadurch gekennzeichnet, dass** in den Strahlengang der über den optischen Kanal mit der Gürtellinse (1) in die Anordnung eintretenden optischen Signale ein kegelstumpfförmiger Reflektor (8) eingefügt ist, von dessen äußerer Mantelfläche die optischen Signale in Richtung des zugehörigen optischen Empfängerelements (3) reflektiert werden und dass der kegelstumpfförmige Reflektor (8) für den Durchtritt der über den anderen, mit der klassischen Sammellinse (2) ausgestatteten optischen Kanal in die Anordnung eintretenden optischen Signale zur Ausbildung eines Durchtritts (11), über welchen diese optischen Signale dem mindestens einen optischen Empfängerelement (4) desselben Kanals zugeführt werden, auf seinen Stirnseiten offen ist oder jeweils einen Durchbruch aufweist wobei zwischen der Gürtellinse (1) und der Mantelfläche des Reflektors (8) eine weitere Gürtellinse (9) sowie zwischen der klassischen Sammellinse (2) und dem Durchtritt (11) durch den Reflektor (8) eine weitere klassische Sammellinse (10) zusätzlich angeordnet ist.

6. Anordnung nach Anspruch 5, **dadurch gekennzeichnet, dass** die optischen Empfängerelemente (3, 4) beider optischen Kanäle gemeinsam auf einer ebenen Außenfläche einer Scheibe (12) angeordnet sind und dass das optische Empfängerelement (3) des mit der Gürtellinse (1) ausgestatteten optischen Kanals konzentrisch um das optische Empfängerelement (4) des anderen optischen Kanals herum angeordnet ist, wobei zwischen dem kegelstumpfförmigen Reflektor (8) und der Scheibe (12) mit den konzentrisch zueinander angeordneten optischen Empfängerelementen (3, 4) zusätzlich eine Sammellinse (13) angeordnet ist.

7. Anordnung nach Anspruch 1, mit drei optischen Kanälen, **dadurch gekennzeichnet, dass** zum Eintritt optischer Signale in die Anordnung einer der optischen Kanäle eine Gürtellinse (1) aufweist und dass die beiden anderen optischen Kanäle je eine klassische Sammellinse (2, 14) aufweisen, wobei diese beiden Sammellinsen (2, 14) auf derselben optischen Achse (7, 7') einander gegenüberliegend angeordnet sind und die optische Achse (6) der Gürtellinse (1) orthogonal zur optischen Achse (7, 7') der Sammellinsen (2, 14) der beiden anderen optischen Kanäle verläuft.

8. Anordnung nach Anspruch 4, **dadurch gekennzeichnet, dass** das an oder durch die Oberfläche eines Hohlzylinders ausgebildete optische Empfängerelement (3) als ein einziger die gesamte Mantelfläche des Hohlzylinders bedeckender Sensor ausgebildet ist, welcher aus organischem Material besteht.

9. Anordnung nach Anspruch 8, **dadurch gekennzeichnet, dass** es sich bei dem Sensor um ein CCD-Element handelt.

## Claims

1. Optical arrangement having
- at least two optical channels, each at least consisting of at least one optical lens, specifically an entry lens, by which optical signals enter the channel and thus the arrangement, and of at least one optical receiver element (3 - 3ₙ, 4, 15), which receives optical signals entering the arrangement via the at least one optical lens of the respective optical channel and converts them into electrical signals,
- at least one processing unit for processing electrical signals of optical receiver elements (3 - 3ₙ, 4, 15),
**characterized**
a.) **in that** at least one of the optical channels has, as the entry lens, a drum lens (1 - 1ₙ) having an optical axis (6 - 6ₙ) and
b.) **in that** at least one other optical channel has, as an entry lens, a classical converging lens (2, 14) having an optical axis (7, 7') and
c.) **in that** at least one optical receiver element (3 - 3ₙ, 4, 15) per optical channel is arranged,
d.) **in that** the optical axis (7, 7') of each classical converging lens (2, 14) that is arranged as an entry lens of an optical channel has, with respect to the optical axis (6 - 6ₙ) of each drum lens (1 - 1ₙ) that is arranged as an entry lens of an optical channel of the arrangement, an angle that differs from zero and
e.) **in that** the at least one processing unit has a two-stage configuration with respect to its hardware and/or software, specifically having a first stage for correction and equalization, separate with respect to the individual optical channels, of the optical signals represented by the electrical signals of the optical receiver elements (3 - 3ₙ, 4, 15) of the optical channels, and having a second stage for linking the output signals of the first stage to produce a spatial image of the environment of the arrangement.

2. Arrangement according to Claim 1, **characterized in that** the external lateral surface of the at least one drum lens (1 - 1ₙ), specifically the curved external surface thereof that faces the external environment of the arrangement and by which the optical signals enter the arrangement, is profiled in accordance with the Fresnel principle.

3. Arrangement according to Claim 1 or 2, having two optical channels, **characterized in that** the lenses through which the optical signals enter the arrangement via in each case one of the two optical channels are arranged such that the optical axes (6, 7) thereof are orthogonal with respect to one another.

4. Arrangement according to Claim 3, **characterized in that** an optical receiver element (3) of the optical channel that is equipped with the drum lens (1) is formed on or by the surface of a hollow cylinder, and an optical receiver element (4) of the other optical channel is arranged on a planar external surface of a plate which for its part forms a front end of the cylindrical optical receiver element (3) or is arranged parallel with respect to a front side of the cylindrical optical receiver element (3).

5. Arrangement according to Claim 3, **characterized in that** a frustoconical reflector (8) is inserted in the beam path of the optical signals entering the arrangement by the optical channel with the drum lens (1), with the optical signals being reflected by the external lateral surface of said reflector (8) in the direction of the associated optical receiver element (3), and **in that** the frustoconical reflector (8) is open at its front sides for the passage of the optical signals entering the arrangement via the other optical channel that is equipped with the classical converging lens (2) to form a passage (11) via which said optical signals are fed to the at least one optical receiver element (4) of the same channel, or in each case has a hole, wherein a further drum lens (9) is arranged between the drum lens (1) and the lateral surface of the reflector (8) and a further classical converging lens (10) is additionally arranged between the classical converging lens (2) and the hole (11) in the reflector (8).

6. Arrangement according to Claim 5, **characterized in that** the optical receiver elements (3, 4) of both optical channels are arranged together on a planar external surface of a plate (12), and **in that** the optical receiver element (3) of the optical channel that is equipped with a drum lens (1) is arranged concentrically around the optical receiver element (4) of the other optical channel, wherein a converging lens (13) is additionally arranged between the frustoconical reflector (8) and the plate (12) that has the optical receiver elements (3, 4) which are arranged concentrically with respect to one another.

7. Arrangement according to Claim 1, having three optical channels, **characterized in that** one of the optical channels has a drum lens (1) for the entry of optical signals into the arrangement, and **in that** the two other optical channels in each case have a classical converging lens (2, 14), wherein said two converging lenses (2, 14) are arranged opposite one another on the same optical axis (7, 7') and the optical axis (6) of the drum lens (1) is orthogonal to the optical axis (7, 7') of the converging lenses (2, 14) of the two other optical channels.

8. Arrangement according to Claim 4, **characterized in that** the optical receiver element (3), which is formed on or by the surface of a hollow cylinder, is configured as a single sensor covering the entire lateral surface of the hollow cylinder, said sensor consisting of an organic material.

9. Arrangement according to Claim 8, **characterized in that** the sensor is a CCD element.

## Revendications

1. Dispositif optique comportant
- au moins deux canaux optiques, dont chacun est composé d'au moins une lentille optique, c'est-à-dire d'une lentille d'entrée, par l'intermédiaire de laquelle des signaux optiques pénètrent dans le canal et donc dans le dispositif, et d'au moins un élément récepteur optique (3 - 3ₙ, 4, 15) qui reçoit des signaux optiques pénétrant dans le dispositif par l'intermédiaire de l'au moins une lentille optique du canal optique respectif, et les convertit en signaux électriques,
- au moins une unité de traitement destinée à traiter les signaux électriques des éléments récepteurs optiques (3 - 3ₙ, 4, 15), **caractérisé**
a.) **en ce qu'**au moins l'un des canaux optiques comporte une lentille de Fresnel (1 - 1ₙ) ayant un axe optique (6 - 6ₙ) en tant que lentille d'entrée, et
b.) **en ce qu'**au moins un canal optique autre que la lentille d'entrée comporte une lentille convergente classique (2, 14) ayant un axe optique (7, 7'), et
c.) **en ce qu'**il est prévu au moins un élément récepteur optique (3 - 3ₙ, 4, 15) par canal optique
d.) **en ce que** l'axe optique (7, 7') de chaque lentille convergente classique (2, 14), disposée en tant que lentille d'entrée d'un canal optique, forme un angle non nul avec l'axe optique (6 - 6ₙ) de chaque lentille de Fresnel (1 - 1ₙ) du dispositif disposée en tant que lentille d'entrée d'un canal optique, et
e.) **en ce que** l'au moins une unité de traitement est constituée de deux étages en ce qui concerne ses propriétés matérielles et/ou logicielles, c'est-à-dire d'un premier étage pour la correction et l'égalisation séparées, par rapport aux canaux optiques individuels, des signaux optiques représentés par les signaux électriques des éléments récepteurs optiques (3 - 3ₙ, 4, 15) des canaux optiques, et d'un second étage pour la mise en réseau des signaux de sortie du premier étage afin de générer une image spatiale de l'environnement du dispositif.

2. Dispositif selon la revendication 1, **caractérisé en ce que** la surface d'enveloppe externe de l'au moins une lentille de Fresnel (1 - 1ₙ), c'est-à-dire sa surface externe courbée tournée vers l'environnement externe du dispositif, par l'intermédiaire de laquelle les signaux optiques pénètrent dans le dispositif, est profilée selon le principe de Fresnel.

3. Dispositif selon la revendication 1 ou 2 comportant deux canaux optiques, **caractérisé en ce que** les lentilles par l'intermédiaire desquelles les signaux optiques pénètrent à travers le dispositif via chacun des deux canaux optiques sont disposées de manière à ce que leurs axes optiques (6, 7) soient orthogonaux l'un à l'autre.

4. Dispositif selon la revendication 3, **caractérisé en ce qu'**un élément récepteur optique (3) du canal optique équipé de la lentille de Fresnel (1) est réalisé sur ou à travers la surface d'un cylindre creux et **en ce qu'**un élément récepteur optique (4) de l'autre canal optique est disposé sur une surface extérieure plane d'un disque, qui forme quant à lui une surface frontale de l'élément récepteur optique cylindrique (3) ou est disposé parallèlement à une face avant de l'élément récepteur optique cylindrique (3).

5. Dispositif selon la revendication 3, **caractérisé en ce qu'**un réflecteur tronconique (8), sur la surface extérieure duquel les signaux optiques sont réfléchis en direction de l'élément récepteur optique associé (3), est inséré dans le chemin de faisceau des signaux optiques pénétrant dans le dispositif par l'intermédiaire du canal optique avec la lentille de Fresnel (1), et **en ce que** le réflecteur tronconique (8) destiné au passage des signaux optiques pénétrant dans le dispositif par l'intermédiaire de l'autre canal optique équipé de la lentille convergente classique (2) pour former un passage (11), par l'intermédiaire duquel lesdits signaux optiques sont acheminés vers l'au moins un élément récepteur optique (4) du même canal, est ouvert sur ses faces avant ou comporte une traversée respective, dans lequel une lentille de Fresnel supplémentaire (9) est disposée entre la lentille de Fresnel (1) et la surface d'enveloppe extérieure du réflecteur (8), et une autre lentille classique supplémentaire (10) est également disposée entre la lentille convergente classique (2) et le passage (11) formé à travers le réflecteur (8).

6. Dispositif selon la revendication 3, **caractérisé en ce que** les éléments récepteurs optiques (3, 4) des deux canaux optiques sont disposés ensemble sur une surface externe plane d'un disque (12) et **en ce que** l'élément récepteur optique (3) du canal optique muni de la lentille de Fresnel (1) est disposé concentriquement autour de l'élément récepteur optique (4) de l'autre canal optique, dans lequel une lentille convergente (13) est en outre disposée entre le réflecteur tronconique (8) et le disque (12) avec les éléments récepteurs optiques (3, 4) disposés concentriquement les uns par rapport aux autres.

7. Dispositif selon la revendication 1 comportant trois canaux optiques, **caractérisé en ce que** l'un des canaux optiques comporte une lentille de Fresnel (1) pour la pénétration de signaux optiques dans le dispositif et **en ce que** les deux autres canaux optiques comportent chacun une lentille convergente classique (2, 14), dans lequel lesdites deux lentilles convergentes (2, 14) sont disposées l'une en face de l'autre sur le même axe optique (7, 7') et dans lequel l'axe optique (6) de la lentille de Fresnel (1) est orthogonal à l'axe optique (7, 7') des lentilles convergentes (2, 14) des deux autres canaux optiques.

8. Dispositif selon la revendication 4, **caractérisé en ce que** l'élément récepteur optique (3) réalisé sur ou à travers la surface d'un cylindre creux est réalisé sous la forme d'un capteur unique recouvrant la totalité de la surface du cylindre creux, lequel capteur est constitué d'une matière organique.

9. Dispositif selon la revendication 8, **caractérisé en ce que** le capteur est un élément CCD.
